# EUROPEAN PATENT APPLICATION

(11) **EP 2 493 136 A1**
(43) Date of publication of application: **29.08.2012**
(21) Application number: 10845495.0
(22) Date of filing: 12.02.2010
(51) Int. Cl.: H04L 12/66, H04L 1/00, H04L 12/26, H04L 29/06

(54) **METHOD, APPARATUS AND SYSTEM FOR MEDIA DATA REPLAY STATISTICS**

(71) Applicant: Huawei Technologies Co., Ltd., Shenzhen, Guangdong 518129 (CN)
(72) Inventor: YANG, Weiwei, Guangdong 518129 (CN)
(74) Representative: Thun, Clemens
(86) International application number: PCT/CN2010/070677
(87) International publication number: WO 2011/097821

(57) **Abstract**

The present invention discloses a method for collecting statistics of replayed media data. The method includes: A media gateway receives a statistics indication for collecting a replayed packet sent by a media gateway controller; and the media gateway determines, according to the statistics indication for collecting a replayed packet, whether received media data is a replayed packet, and counts a determined replayed packet. In the embodiments of the present invention, according to the statistics indication for collecting a replayed packet, the media gateway checks whether received media data is a replayed packet, and collects statistics of the replayed packets. Thereby, the media gateway protects security of the received media data and collects statistics of the status of received media data.

## Description

### FIELD OF THE INVENTION

The present invention relates to the field of communications technologies, and in particular, to a method, an apparatus, and a system for collecting statistics of replayed media data.

### BACKGROUND OF THE INVENTION

With the wide application of VoIP (Voice over IP), security of data transmission in the network is increasingly important. From the perspective of protocols, the security of VoIP includes signaling security and media plane security. Media plane security (Media Plane Security) in the conventional network technologies still needs to be enhanced and is a hot topic in the field of international standards.

The Real-time Transport Protocol (RTP) is a protocol developed by the Internet Engineering Task Force IETF (Internet Engineering Task Force) for transmission of multimedia data streams. RTP generally runs over the user datagram protocol UDP (User Datagram Protocol), but may also run over the transmission control protocol TCP (Transmission Control Protocol). RTP serves to transmit multimedia data, but the transmission control protocol RTCP (RTP Control Protocol) is responsible for quality of service monitoring, congestion control, media synchronization, uniform naming of the transport planes, and estimation and planning of the session size. Currently, for network multimedia applications that require high security (such as network video surveillance, network video conference, and VoIP call), the security mechanism provided by RTP is far from enough.

The secure real-time transport protocol SRTP (Secure Real-time Transport Protocol) is specially designed for RTP, and provides security mechanisms such as confidentiality, message authentication, and replay protection for RTP messages and RTCP messages. The SRTP key agreement process is implemented through cooperation with non-SRTP mechanisms. For example, in an IMS (IP Multimedia Subsystem), SIP can be used to agree on SRTP key information used in a session. The key information is transferred through interaction between the service layer entity and the media plane execution entity to implement the security function of the media plane.

The replay attack is one of the common attack modes in the network. The replay attack means that an attacker sends a packet already received by a destination host to spoof the system. The attacker steals an authentication credential through network monitoring or by other means, and then sends the authentication credential to an authentication server again. The attacker breaks the data transmission path through plenty of fake media, which repeats or delays the normal data transmission or even causes the server or network node to collapse. Encryption prevents session hijacking effectively, but does not prevent replay attacks.

In the current network scenarios, the media plane execution entity receives an SRTP message, but is unable to provide a replay protection mechanism to tackle possible replay attacks. The service layer control entity also lacks means or methods for learning or counting the replayed packets or authentication-failed packets, and is vulnerable to latent security risks on the media plane.

### SUMMARY OF THE INVENTION

In view of the problems of the prior art, embodiments of the present invention provide a method, an apparatus, and a system for collecting statistics of replayed media data to learn the status of possible replay attacks.

A method for collecting statistics of replayed media data includes:
receiving, by a media gateway, a statistics indication for collecting a replayed packet sent by a media gateway controller; and
determining, by the media gateway according to the replayed packet statistics indication, whether received media data is a replayed packet, and counting a determined replayed packet.

A media gateway includes:
a receiving unit, configured to receive a statistics indication for collecting a replayed packet sent by a media gateway controller; and
a replay counting unit, configured to determine, according to the statistics indication for collecting a replayed packet, whether received media data is a replayed packet, and count a determined replayed packet.

A communication system includes:
a media gateway controller, configured to send a statistics indication for collecting a replayed packet; and
a media gateway, configured to receive the statistics indication for collecting a replayed packet, determine, according to the statistics indication for collecting a replayed packet, whether received media data is a replayed packet, and count a determined replayed packet.

Evidently, in the embodiments of the present invention, according to the statistics indication for collecting a replayed packet, the media gateway checks whether received media data is a replayed packet, and collects statistics of the replayed packets. Thereby, the media gateway collects statistics of the status of received media data.

### BRIEF DESCRIPTION OF THE DRAWINGS

FIG. 1 is a flowchart of a method for collecting statistics of replayed media data according to a first embodiment of the present invention;
FIG. 2 is a flowchart of a method for collecting statistics of replayed media data according to a second embodiment of the present invention;
FIG. 3 is a flowchart of a method for collecting statistics of replayed media data according to a third embodiment of the present invention;
FIG. 4 is a flowchart of a method for collecting statistics of replayed media data according to a fourth embodiment of the present invention;
FIG. 5 is a block diagram of composition of a media gateway according to an embodiment of the present invention; and
FIG. 6 is a block diagram of composition of a system according to an embodiment of the present invention.

### DETAILED DESCRIPTION OF THE EMBODIMENTS

To make the features and advantages of the embodiments of the present invention more comprehensible, the following describes the embodiments of the present invention in detail with reference to the accompanying drawings.

In an architecture in which the signaling control is separated from media carrier plane, a gateway control protocol such as H.248 is generally used as a control protocol between a service layer control entity and a media plane execution entity. Therefore, under such a mechanism, the media plane execution entity is a media gateway (Media Gateway, MG for short), and the service layer control entity is a media gateway controller (Media Gateway Controller, MGC for short). In the following instance, the media gateway and the media gateway controller are taken as example for description.

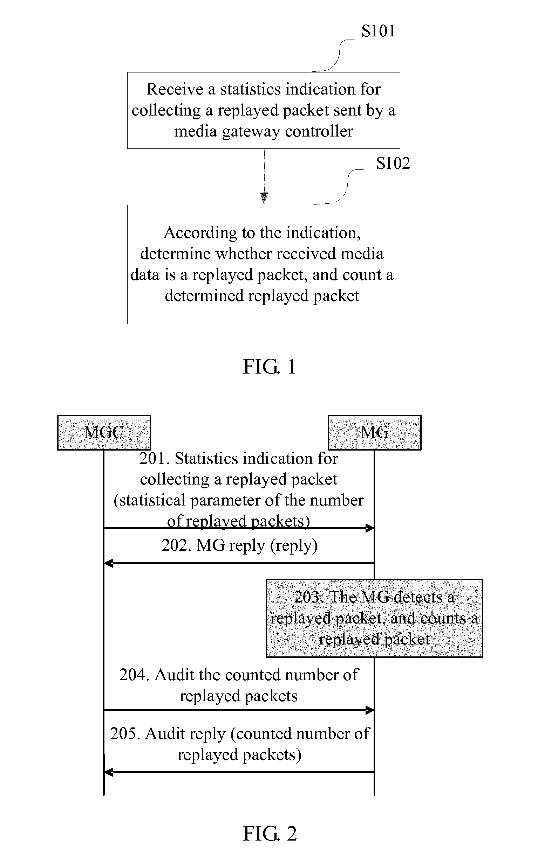

FIG. 1 is a flowchart of a method for collecting statistics of replayed media data according to a first embodiment of the present invention. The method includes the following steps:

Step 101: The media gateway receives a statistics indication for collecting a replayed packet sent by the media gateway controller.

In the embodiment of the present invention, for the implementation of detecting and collecting statistics of replayed media data, the media gateway controller needs to deliver related information to the media gateway so that the media gateway begins to detect and collect statistics of received media data. The information may be a statistics indication for collecting a replayed packet, and the information is implemented by extending the H.248 protocol. The information may be carried in an H.248 request message such as ADD, MODIFY, or MOVE.

Step 102: According to the statistics indication for collecting a replayed packet, the media gateway determines whether received media data is a replayed packet, and counts a determined replayed packet.

To detect a replay attack, the media gateway in the embodiment of the present invention may maintain a list of received and authenticated media data. The list may be named a replay list (Replay list). The replay list may directly record received and authenticated media data. When receiving media data, the media gateway searches the replay list to check whether the currently received media data has been received before, that is, check whether the currently received media data exists in the replay list. Accordingly, the media gateway determines whether the currently received media data is a replayed packet, and may discard the replayed packet directly if it is a replayed packet.

The replay list may also record index information (Index) of received and authenticated media data. The index information may include the identifier, or sequence number or sending time of the media data, or any other information that uniquely identifies the media data. Specifically, if the replay list records index information, when the media gateway receives media data, the media gateway retrieves an index value of the media data, and searches the replay list recorded on the media gateway according to the index value. If the index value is not included in the replay list recorded on the media gateway, it is regarded that the media data is not a replayed packet. If the index value already exists in the replay list recorded on the media gateway, it indicates that the same media data has been received by the media gateway before, and that the currently received media data is a replayed packet. In such case, the media gateway may discard the replayed media data.

In addition, the replay list on the media gateway may be maintained through a sliding window (sliding window) so that the media gateway detects a replay attack more efficiently. For example, only a fixed amount of index data needs to be maintained in the replay list of the media gateway. The index value of the received data is judged according to a configured or specified window size (winow size). Generally, media data is sent in ascending order of the identifiers or sequence numbers of the media data, or sent in time order. In this case, when the index value of the received media data is smaller than or later than the window size of a current sliding window, it is regarded that the media gateway has received the same media data before and that the media data is a replayed packet. The currently received data is determined as a non-replayed packet only if the index value of the received data is ahead of the window size of the current sliding window.

To perform real-time detection and monitoring on a replay protection status in the media gateway in the embodiment of the present invention, further security measures may be taken, as described as follows:

1. A statistical parameter or event is added in the gateway control protocol H.248. The parameter or event is used to instruct the media gateway to count detected replayed packets. For example, the statistical parameter or event is named "number of replayed packets (Number of replayed packets, or replay for short)". The type of the statistical parameter of the number of replayed packets may be set as an integer (Integer), and its possible values are all positive integers, that is, integers greater than or equal to 0. The statistical parameter or event of the number of replayed packets is set by the media gateway controller on the media gateway, and specifically, may be carried in a statistics indication for collecting a replayed packet delivered by the media gateway controller, or may be delivered by the media gateway controller to the media gateway separately. The statistical parameter or event of the number of replayed packets may be defined in an existing H.248 function package, or in a new function package. For example, a new function package is defined and named "media plane security (Media Plane Security)" package.

The statistical parameter of the number of replayed packets may be implemented on the media gateway to count the replayed packets received on the whole media gateway, or may be implemented on a termination (Termination) plane of the media gateway to count the replayed packets received on the specified termination, or may be implemented on a stream (Stream) plane to count the replayed packets received on the specified stream.

After the media gateway controller delivers the statistical parameter or event of the number of replayed packets to the media gateway, the media gateway starts counting detected replayed packets. If there is a piece of media data that is detected as a replayed packet, the media gateway records the number of replayed packets that is counted.

2. The media gateway controller may obtain the number of replayed packets counted by the media gateway. The media gateway controller may obtain the counted number of replayed
packets on the media gateway through an audit message, or obtain the counted number through a conditional statistics mechanism. Through the conditional statistics mechanism, the media gateway controller sets, on the media gateway, a condition for reporting the counted number of replayed packets. The reporting condition may be carried in the statistics indication for collecting a replayed packet delivered by the media gateway controller, or may be delivered by the media gateway controller to the media gateway through an independent message. For example
   , the reporting condition is set as "replay=100", indicating that the media gateway controller expects the media gateway to send a notification message to the media gateway controller when the media gateway detects 100 replayed packets. After receiving a message that carries the condition of reporting the number of replayed packets, the media gateway may report the number according to the condition. When the reporting condition is met, an event message is triggered to notify the media gateway controller.

3. The media gateway may not only perform replay attack detection on the received media data, but also perform authentication and counting operations. The authentication operation refers to checking validity of the media data according to the data authentication algorithm policy related to media security after the media data is determined as a non-replayed packet. The authentication algorithm comes in many types, for example, key, signature, watermark, or key-based algorithms, which are all practicable inside the media gateway by using existing authentication algorithms. The media gateway may perform the authentication and counting operations according to an authentication-failed packet statistics indication sent by the media gateway controller. In the operation of performing authentication on media data, if the media data is valid, the media gateway determines that the packet is received correctly, and may update the index information in the replay list; if the authentication fails, the media gateway discards the media data, and collects statistics of authentication-failed packets.

4. The media gateway controller may also instruct the media gateway to count the non-replayed packets that failed to be authenticated and report the result to the media gateway controller. For example, a statistical parameter or event is added in the gateway control protocol H.248. The parameter or event is used to trigger the media gateway to collect statistics of authentication-failed media data. The statistical parameter or event may be named "number of authentication-failed packets (Number of authentication failed packets, or authfail for short)". The type of this signal may be set as an integer (Integer), and its possible values are positive integers, that is, integers greater than or equal to 0. The statistical parameter or event of the number of authentication-failed packets may be defined in an existing H.248 function package, or in a new function package such as the media plane security (Media Plane Security) package mentioned above. The statistical parameter or event of the number of authentication-failed packets is set by the media gateway controller on the media gateway, and specifically, may be carried in an authentication-failed packet statistics indication to the media gateway, or may be delivered to the media gateway through an independent message. The number of authentication-failed packets may be reported through an audit message of the media gateway controller, or through the foregoing conditional statistics mechanism. Through the conditional statistics mechanism, the authentication-failed packet statistics indication sent to the media gateway may further include a condition of reporting the number of authentication-failed packets, that is, include a preset threshold number of authentication-failed packets.

Through the embodiment of the present invention, the media gateway implements security protection for the received media data, and counts and reports the replay attacks. Thereby, the media gateway controller may learn the status of the replayed packets on the media gateway and the number of insecure non-replayed packets, which serve as a basis for deciding further security measures. The embodiment of the present invention provides effective support for the media security functions implemented by the media gateway controller and the media gateway, fills the technological gap in media security/replay protection of the media gateway, and meets the requirement for such security protection in media control applications.

FIG. 2 is a flowchart of a method for collecting statistics of replayed media data according to a second embodiment of the present invention. The method includes the following steps:

Step 201: An MGC sends a statistics indication for collecting a replayed packet to an MG. The statistics indication for collecting a replayed packet carries a statistical parameter or event of the number of replayed packets. The statistics indication for collecting a replayed packet may be carried in an H.248 request message, such as ADD, MODIFY, or MOVE.

Step 202: The MG returns a reply message to the media gateway controller after receiving the indication message that carries the statistical parameter or event of the number of replayed packets.

Step 203: The MG detects a replay attack for the received media data. In the first embodiment, a replay list and a sliding window are maintained on the MG. The MG retrieves an index value of the received media data, compares the index value with the window size of the sliding window, and judges whether the currently received media data is a replayed packet. If the currently received media data is a replayed packet, the MG discards the replayed packet, and counts the replayed packets already received, that is, updates the value of the statistical parameter of the number of replayed packets, for example, increases the value by 1.

Step 204: The MGC delivers an H.248 audit message to the MG. The audit message carries an audit object, that is, the number of replayed packets.

Step 205: The MG returns an audit reply message that carries the counted number of replayed packets to the MGC. Therefore, the MGC obtains a current replay status on the MG.

In the second embodiment of the present invention, through a statistics indication for collecting a replayed packet, the MGC instructs the MG to count replay attacks; through a statistical parameter or event of the number of replayed packets, the MGC instructs the MG to count the counted replayed packets; subsequently, the MGC obtains the number of replayed packets through an audit message. In this way, the media data on the MG is protected, and the status of the media data is learned.

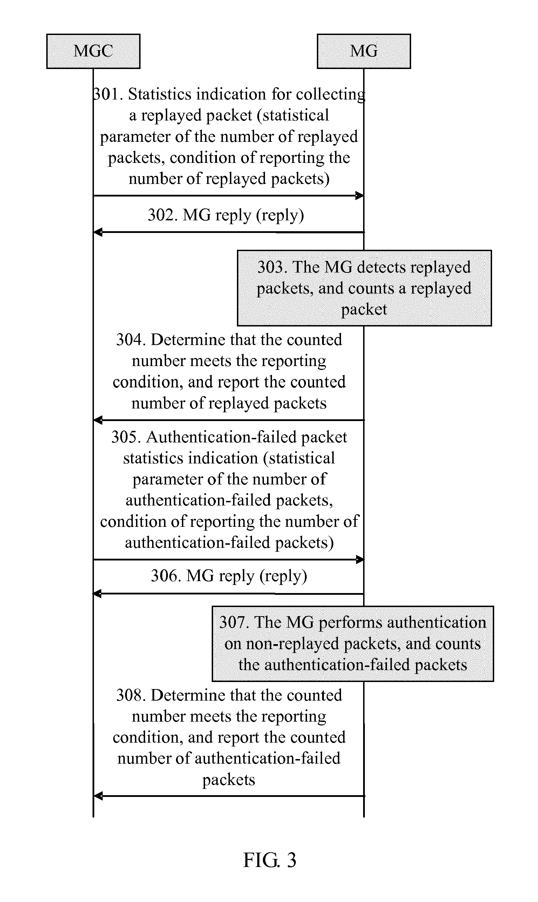

FIG. 3 is a flowchart of a method for collecting statistics of replayed media data according to a third embodiment of the present invention. The method includes the following steps:

Step 301: An MGC sends a statistics indication for collecting a replayed packet to an MG. The statistics indication for collecting a replayed packet carries a statistical parameter of the number of replayed packets and a condition of reporting the number of replayed packets. The statistics indication for collecting a replayed packet may be carried in an H.248 request message, such as ADD, MODIFY, or MOVE.

Step 302: The MG returns a reply message to the media gateway controller after receiving the statistics indication for collecting a replayed packet.

Step 303: The MG detects a replay attack for the received media data. In the second embodiment, a replay list and a sliding window are maintained on the MG. The MG retrieves an index value of the received media data, compares the index value with the window size of the sliding window, and judges whether the currently received media data is a replayed packet. If the currently received media data is a replayed packet, the MG discards the replayed packet, and counts the replayed packets already received, that is, updates the value of the statistical parameter of the number of replayed packets, for example, increases the value by 1.

Step 304: If the MG determines that the currently recorded number of replayed packets meets the condition of reporting the number of replayed packets, the MG reports the value of the statistical parameter of the number of replayed packets to the MGC. Thereby, the MGC obtains the current status of replayed packets on the MG.

Step 305: The MGC sends an authentication-failed packet statistics indication to the MG. The authentication-failed packet statistics indication carries a statistical parameter of the number of authentication-failed packets and a condition of reporting the number of authentication-failed packets. The authentication-failed packet statistics indication may be carried in an H.248 request message, such as ADD, MODIFY, or MOVE.

Step 306: The MG returns a reply message to the media gateway controller after receiving an indication message that carries the statistical parameter of the number of authentication-failed packets.

Step 307: The MG performs authentication on the detected non-replayed packets. If the media data of a non-replayed packet is valid, the MG determines that the packet is received correctly, and then updates the index information in the replay list. If the authentication fails, the MG discards the media data, and counts authentication-failed packets, that is, updates the value of the statistical parameter of the number of authentication-failed packets, for example, increases the value by 1.

Step 308: If the MG determines that the currently counted number of authentication-failed packets meets the condition of reporting the number of authentication-failed packets, the MG reports the counted number of authentication-failed packets to the MGC. Thereby, the MGC obtains a current status of authentication-failed packets in the MG.

In the third embodiment of the present invention, through a statistics indication for collecting a replayed packet, the MGC instructs the MG to detect replay attacks; by setting a statistical parameter of the number of replayed packets and a condition of reporting replayed packets, the MGC instructs the MG to count the replayed packets that are detected and to report the number when the preset condition is met. In this way, the status of the media data in the MG is learned. The authentication and the reporting of the non-replayed packets in steps 305-308 can implement better detection and protection for the security of the media data. Those skilled in the art understand that the subsequent steps are optional; steps 305-308 may also be performed after step 303, and the reported result of counting the authentication-failed non-replayed packets may also be obtained through audit carried out by the MG.

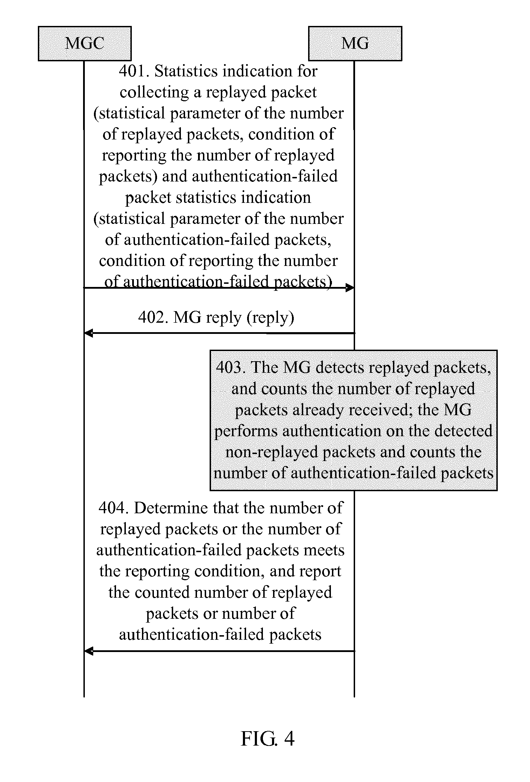

FIG. 4 is a flowchart of a method for collecting statistics of replayed media data according to a fourth embodiment of the present invention. The method includes the following steps:

Step 401: An MGC sends a statistics indication for collecting a replayed packet and an authentication-failed packet statistics indication to an MG. The statistics indication for collecting a replayed packet carries a statistical parameter the number of of replayed packets and a condition of reporting the number of replayed packets; the authentication-failed packet statistics indication carries a statistical parameter of the number of authentication-failed packets and a condition of reporting the number of authentication-failed packets. The statistics indication for collecting a replayed packet and the authentication-failed packet statistics indication may be carried in an H.248 request message, such as ADD, MODIFY, or MOVE.

Step 402: The MG returns a reply message to the media gateway controller after receiving the indication.

Step 403: The MG detects a replay attack for the received media data, and judges whether the currently received media data is a replayed packet. If the currently received media data is a replayed packet, the MG counts the replayed packets already received, that is, updates the value of the statistical parameter of the number of the replayed packets, for example, increases the value by 1. Further, the MG performs authentication on detected non-replayed packets. If the media data of a non-replayed packet is valid, the MG determines that the packet is received correctly, and updates the index information in the replay list. If the authentication fails, the MG discards the media data, and counts the number of authentication-failed packets, that is, updates the value of the statistical parameter of the number of the authentication-failed packets, for example, increases the value by 1.

Step 404: If the MG determines that the currently recorded number of replayed packets meets the condition of reporting the number of replayed packets, the MG reports the value of the statistical parameter of the number of replayed packets to the MGC. Thereby, the MGC obtains a current status of replayed packets on the MG; if the MG determines that the currently counted number of authentication-failed packets meets the condition of reporting the number of authentication-failed packets, the MG reports the value of the statistical parameter of the number of authentication-failed packets to the MGC. Therefore, the MGC obtains a current status of authentication-failed packets on the MG.

In the fourth embodiment of the present invention, through a statistics indication for collecting a replayed packet, the MGC instructs the MG to detect replay attacks; by setting a statistical parameter of the number of replayed packets and a condition of reporting the number of replayed packets, the MGC instructs the MG to count the number of detected replayed packets and to report the number when the preset condition is met; through an authentication-failed packet statistics indication, the MGC performs authentication on non-replayed packets; by setting a statistical parameter of the number of authentication-failed packets and a condition of reporting the number of authentication-failed packets, the MGC instructs the MG to count the number of authentication-failed packets that are detected and to report the number when the preset condition is met. In this way, the media data on the MG is further protected, and the status of the media data is learned.

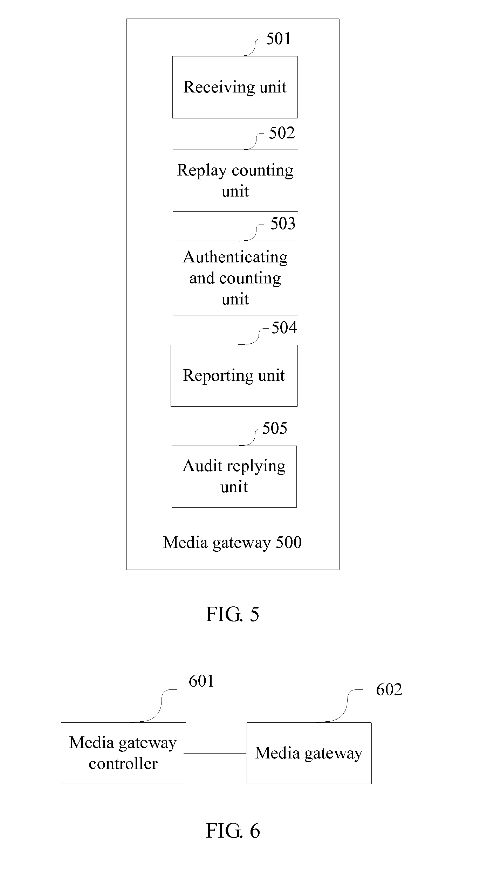

An embodiment of the present invention provides a media gateway. As shown in FIG. 5, the media gateway 500 provided in the embodiment of the present invention includes:
a receiving unit 501, configured to receive a statistics indication for collecting a replayed packet sent by a media gateway controller; and
a replay counting unit 502, configured to determine, according to the statistics indication for collecting a replayed packet, whether received media data is a replayed packet, and count a determined replayed packet.

The receiving unit 501 is further configured to receive a statistical parameter of the number of replayed packets or a statistical event of replayed packets, where the statistical parameter or statistical event is carried in the statistics indication for collecting a replayed packet, and therefore, the replay counting unit 502 is specifically configured to count the replayed packets.

The receiving unit 501 is further configured to receive a condition of reporting the number of replayed packets, where the condition is sent by the media gateway controller; and therefore, the media gateway further includes: a reporting unit 504, configured to report the counted number of replayed packets to the media gateway controller when the number of the replayed packets that is counted by the replay counting unit 502 meets the condition of reporting the number of replayed packets.

The receiving unit 501 is further configured to receive an audit message sent by the media gateway controller, where the audit object of the audit message is the counted number of replayed packets, and therefore, the media gateway further includes: an audit replying unit 505, configured to return an audit reply message to the media gateway controller, where the audit reply message carries the number of replayed packets counted by the replay counting unit.

The receiving unit 501 is further configured to receive an authentication-failed packet statistics indication sent by the media gateway controller, and therefore, the media gateway further includes: an authenticating and counting unit 503, configured to perform authentication, according to the authentication-failed packet statistics indication, on the non-replayed packets determined by the replay counting unit, and count authentication-failed packets.

The receiving unit 501 is further configured to receive a statistical parameter of the number of authentication-failed packets or a statistical event of authentication-failed packets, where the statistical parameter or statistical event is carried in the authentication-failed packet statistics indication, and therefore, the authenticating and counting unit 503 is specifically configured to count authentication-failed packets.

The receiving unit 501 is further configured to receive a condition of reporting the number of authentication-failed packets, where the condition is sent by the media gateway controller; and therefore, the reporting unit 504 is further configured to report the counted number of authentication-failed packets to the media gateway controller when the number of the authentication-failed packets that is counted by the authenticating and counting unit meets the condition of reporting the number of authentication-failed packets.

The receiving unit 501 is further configured to receive an audit message sent by the media gateway controller, where the audit object of the audit message is the counted number of authentication-failed packets, and therefore, the audit replying unit 505 is further configured to return an audit reply message to the media gateway controller, where the audit reply message carries the number of authentication-failed packets counted by the authenticating and counting unit.

The media gateway 500 described above is an exemplary embodiment of the present invention. Those skilled in the art understand that other embodiments of the media gateway that includes a receiving unit and a replay counting unit may be provided to achieve the obj ectives of the present invention.

An embodiment of the present invention provides a communication system. As shown in FIG. 6, the communication system provided in the embodiment of the present invention includes:
a media gateway controller 601, configured to send a statistics indication for collecting a replayed packet; and
a media gateway 602, configured to receive the statistics indication for collecting a replayed packet, determine, according to the statistics indication for collecting a replayed packet, whether received media data is a replayed packet, and count a determined replayed packet.

The media gateway controller 601 is configured to send an authenticate-failed packet statistics indication to the media gateway; and the media gateway 602 is further configured to perform authentication on determined non-replayed packets according to the authentication-failed packet statistics indication and count authentication-failed packets.

Through the embodiment of the present invention, the media gateway implements security protection for the received media data, and counts and reports the replay attacks. Thereby, the media gateway controller learns the status of the replayed packets in the media gateway and the number of insecure non-replayed packets, which serve as a basis for deciding further security measures. The embodiment of the present invention provides effective support for the media security functions implemented by the media gateway controller and the media gateway, fills the technological gap in media security/replay protection of the media gateway, and meets the requirement for such security protection in media control applications.

Finally, it should be noted that the terms "including", "comprising", and any other variation thereof mentioned herein are intended to cover a non-exclusive inclusion, so that a process, method, article, or device that includes a series of elements includes not only the elements but also other elements that are not listed, or elements that are inherent to the process, method, article, or device. Unless otherwise restricted, in the context of "including" or "comprising", the process, method, article, or device that includes or comprises the specified elements may include other identical elements.

After reading the foregoing embodiments, those skilled in the art are clearly aware that the present invention may be implemented through hardware, or, preferably in most circumstances, through software in addition to a necessary universal hardware platform. Based on such understanding, all or a part of the contribution of the technical solution of the present invention to the prior art may be embodied in a software product. The software product may be stored in a storage medium such as a ROM/RAM, a magnetic disk, or a CD-ROM, and incorporate several instructions for instructing a computer device (such as a personal computer, a server, or a network device) to execute the method specified in any embodiment of the present invention or a part of the embodiment.

Detailed above are an inter-office handover method, apparatus, and system provided by the embodiments of the present invention. Although the principle and implementation of the present invention are described with reference to exemplary embodiments, the embodiments are only intended to help understand the method and core idea of the present invention. In addition, with respect to the implementation and applicability of the present invention, modifications and variations may be made by persons of ordinary skill in the art according to the idea of the present invention. Therefore, the specification shall not be construed as a limitation on the present invention.

## Claims

1. A method for collecting statistics of replayed media data, comprising:
receiving, by a media gateway, a statistics indication for collecting a replayed packet sent by a media gateway controller; and
determining, by the media gateway according to the statistics indication for collecting a replayed packet, whether received media data is a replayed packet, and counting a determined replayed packet.

2. The method according to claim 1, wherein the method further comprises:
maintaining, by the media gateway, a replay list that records received and authenticated media data; and
the determining, by the media gateway, whether received media data is a replayed packet comprises:
searching the replay list, and determining whether the received media data exists in the replay list; and, if so, determining that the received media data is a replayed packet.

3. The method according to claim 1, wherein:
the statistics indication for collecting a replayed packet comprises a statistical parameter of the number of replayed packets or a statistical event of replayed packets; and
the counting a determined replayed packet comprises:
counting the number of the replayed packets.

4. The method according to claim 3, wherein:
the statistics indication for collecting a replayed packet further comprises a condition of reporting the number of the replayed packets, and the method further comprises:
reporting, by the media gateway, the counted number of replayed packets to the media gateway controller if a recorded number of replayed packets meets the condition of reporting the number of replayed packets.

5. The method according to claim 3, further comprising:
receiving, by the media gateway, an audit message sent by the media gateway controller, wherein an audit object of the audit message is the counted number of replayed packets; and
returning, by the media gateway, an audit reply message to the media gateway controller, wherein the audit reply message carries the counted number of replayed packets.

6. The method according to claim 1, further comprising:
receiving, by the media gateway, an authentication-failed packet statistics indication sent by the media gateway controller; and
performing authentication, by the media gateway, on determined non-replayed packets according to the authentication-failed packet statistics indication, and counting authentication-failed packets.

7. The method according to claim 6, wherein:
the authentication-failed packet statistics indication comprises a statistical parameter of the number of authentication-failed packets or a statistical event of authentication-failed packets; and
the counting authentication-failed packets comprises:
counting the number of the authentication-failed packets.

8. The method according to claim 7, wherein:
the authentication-failed packet statistics indication further comprises a condition of reporting the number of authentication-failed packets, and the method further comprises:
reporting, by the media gateway, the counted number of authentication-failed packets to the media gateway controller if a recorded number of authentication-failed packets meets the condition of reporting the number of authentication-failed packets.

9. The method according to claim 7, further comprising:
receiving, by the media gateway, an audit message sent by the media gateway controller, wherein an audit object of the audit message is the counted number of authentication-failed packets; and
returning, by the media gateway, an audit reply message to the media gateway controller, wherein the audit reply message carries the counted number of authentication-failed packets.

10. A media gateway, comprising:
a receiving unit, configured to receive a statistics indication for collecting a replayed packet sent by a media gateway controller; and
a replay counting unit, configured to determine, according to the statistics indication for collecting a replayed packet, whether received media data is a replayed packet, and count a determined replayed packet.

11. The media gateway according to claim 10, wherein:
the receiving unit is further configured to receive a statistical parameter of replayed packets or a statistical event of the number of replayed packets, wherein the statistical parameter or statistical event is carried in the statistics indication for collecting a replayed packet; and
the replay counting unit is specifically configured to count the number of the replayed packets.

12. The media gateway according to claim 11, wherein:
the receiving unit is further configured to receive a condition of reporting the number of replayed packets, wherein the condition is sent by the media gateway controller; and
the media gateway further comprises:
a reporting unit, configured to report the counted number of replayed packets to the media gateway controller when the number of the replayed packets that is counted by the replay counting unit meets the condition of reporting the number of replayed packets.

13. The media gateway according to claim 11, wherein:
the receiving unit is further configured to receive an audit message sent by the media gateway controller, wherein an audit object of the audit message is the counted number of replayed packets; and
the media gateway further comprises:
an audit replying unit, configured to return an audit reply message to the media gateway controller, wherein the audit reply message carries the number of replayed packets counted by the replay counting unit.

14. The media gateway according to claim 10, wherein:
the receiving unit is further configured to receive an authentication-failed packet statistics indication sent by the media gateway controller; and
the media gateway further comprises:
an authenticating and counting unit, configured to perform authentication, according to the authentication-failed packet statistics indication, on non-replayed packets determined by the replay counting unit, and count authentication-failed packets.

15. The media gateway according to claim 14, wherein:
the receiving unit is further configured to receive a statistical parameter of the number of authentication-failed packets or a statistical event of authentication-failed packets, wherein the statistical parameter or statistical event is carried in the authentication-failed packet statistics indication; and
the authenticating and counting unit is specifically configured to count the number of the authentication-failed packets.

16. The media gateway according to claim 15, wherein:
the receiving unit is further configured to receive a condition of reporting the number of authentication-failed packets, wherein the condition is sent by the media gateway controller; and
the reporting unit is further configured to report the counted number of authentication-failed packets to the media gateway controller when the number of the authentication-failed packets that is counted by the authenticating and counting unit meets the condition of reporting the number of authentication-failed packets.

17. The media gateway according to claim 15, wherein:
the receiving unit is further configured to receive an audit message sent by the media gateway controller, wherein an audit object of the audit message is the counted number of authentication-failed packets; and
the audit replying unit is further configured to return an audit reply message to the media gateway controller, wherein the audit reply message carries the number of authentication-failed packets counted by the authenticating and counting unit.

18. A communication system, comprising:
a media gateway controller, configured to send a statistics indication for collecting a replayed packet; and
a media gateway, configured to receive the statistics indication for collecting a replayed packet, determine, according to the statistics indication for collecting a replayed packet, whether received media data is a replayed packet, and count a determined replayed packet.

19. The communication system according to claim 18, wherein:
the media gateway controller is further configured to send an authentication-failed packet statistics indication to the media gateway; and
the media gateway is further configured to perform authentication on determined non-replayed packets according to the authentication-failed packet statistics indication and count authentication-failed packets.
